(19) Europäisches Patentamt
European Patent Office
Office européen des brevets

(11) **EP 1 419 088 B1**

(12) **EUROPÄISCHE PATENTSCHRIFT**

(45) Veröffentlichungstag und Bekanntmachung des Hinweises auf die Patenterteilung:
**03.10.2007 Patentblatt 2007/40**

(51) Int Cl.:
**B64D 17/00** (2006.01) **G05D 1/00** (2006.01)

(21) Anmeldenummer: 02758165.1

(22) Anmeldetag: **23.08.2002**

(86) Internationale Anmeldenummer:
**PCT/DE2002/003136**

(87) Internationale Veröffentlichungsnummer:
**WO 2003/018401 (06.03.2003 Gazette 2003/10)**

(54) **BAHNFÜHRUNGS-SYSTEME FÜR EINEN FALL- ODER GLEITSCHIRM UND FLUGBAHN-PLANUNGSEINRICHTUNGEN ZUR PLANUNG DES EINSATZES ZUMINDEST EINES FALL- ODER GLEITSCHIRMS SOWIE VERFAHREN ZUR DURCHFÜHRUNG DER BAHNFÜHRUNG UND DER PLANUNG**

PATH GUIDANCE SYSTEMS FOR A PARACHUTE/PARAGLIDER AND FLIGHT PATH PLANNING DEVICES FOR PLANNING THE USE OF AT LEAST ONE PARACHUTE OR PARAGLIDER, AND SYSTEM FOR CARRYING OUT SAID PATH GUIDANCE AND PLANNING

SYSTEMES DE GUIDAGE DE TRAJECTOIRE POUR PARACHUTE OU PARAPENTE, DISPOSITIFS DE PLANIFICATION DE VOL POUR LA PLANIFICATION DE L'UTILISATION D'AU MOINS UN PARACHUTE OU UN PARAPENTE, ET PROCEDE DE MISE EN OEUVRE DUDIT GUIDAGE DE TRAJECTOIRE ET DE LADITE PLANIFICATION

(84) Benannte Vertragsstaaten:
**DE ES FR GB IT**

(30) Priorität: **24.08.2001 DE 10140676**

(43) Veröffentlichungstag der Anmeldung:
**19.05.2004 Patentblatt 2004/21**

(73) Patentinhaber: **EADS Deutschland GmbH
85521 Ottobrunn (DE)**

(72) Erfinder: **LOHMILLER, Winfried
81373 München (DE)**

(56) Entgegenhaltungen:
**DE-A- 4 336 056      US-A- 5 522 567**

**Beschreibung**

Die Erfindung betrifft Bahnführungs-Systeme für einen Fall- oder Gleitschirm und zur Implementierung in ein Computersystem vorgesehene Verfahren zur Bahnführung sowie Flugbahn-Planungseinrichtungen und zur Implementierung in ein Computersystem vorgesehene Verfahren zur Planung des Einsatzes zumindest eines Fall- oder Gleitschirms.

Als Stand der Technik sind Flugplanungs-Stationen zur Planung von Flugrouten für Flugzeuge bekannt. Weiterhin sind aus dem allgemeinen Stand der Technik Navigationsgeräte für Gleitschirm-Piloten bekannt.

In der DE 43 36 056 A1 wird zur Erreichung einer möglichst großen lokalen Treffgenauigkeit in bezug auf einen räumlich festgelegten Landepunkt vorgeschlagen, zum Lenken eines Fallschirms eine Positionsermittlungseinheit, eine Flugsteuereinrichtung und Betätigungsmittel vorzusehen, mit denen der Fallschirm auf einer Soll-Flugbahn gehalten werden soll. Nach der DE 43 36 056 A1 wird die Sollflugbahn in einer ersten Ausführungsform auf sehr komplexe Weise in einem Flugplanungsrechner ermittelt, wobei das eigenltiche Berechnungsverfahren nicht offenbart ist. In einer weiteren Ausführungsform der DE 43 36 056 A1 wird die Soll-Flugbahn von einem vorausfliegenden Fallschirm-Springer mittels eines GPS-Positionssensors ermittelt, indem dessen tatsächliche nach den drei Raum-Koordinaten bestimmte Flugbahn über einen Funkssender an nachfolgende Fallschirme übertragen werden. Mit diesen Mitteln wird ein Fallschirm auf einer vorbestimmten Flugbahn gehalten und zum Landepunkt gesteuert.

Das in der DE 43 36 056 A1 vorgeschlagene Verfahren hat den Nachteil, daß lokale Windverhältnisse eine Steuerung einer Vielzahl von Fallschirmen unmöglich macht, da sie sich beispielsweise wegen starken Abwinden oder Gegenwinden nicht auf der Soll-Flugbahn halten können. Ein weiterer Nachteil ist, daß zwingend die Soll-Flugbahn in ihrem räumlichen Verlauf ermittelt und an die Flugsteuereinrichtung übermittelt werden muß. So ist in der Flugsteuer-Einrichtung der DE 43 36 056 A1 eine Positions-Ermittlungeinheit in Form eines GPS-Positionssensors erforderlich, das beispielsweise den Nachteil hat, daß es störanfällig ist und im ungünstigen Gelände, insbesondere im Gebirge, oder in einem feindlichen Gelände der Empfang nicht in jeder Flugphase sichergestellt ist. Außerdem ist die Berechnung der Soll-Flugbahne nach der DE 43 36 056 A1 aufwendig und von einigen Unsicherheiten, wie beispielsweise richtigen Annahmen über das Windprofil, abhängig.

In der US 5 522 567 ists ein Bahnführungs-Verfahren für einen Gleitschirm offenbart, nach dem ein optimaler Flugpfad durch Höhen-Positions-Punkte ermittelt wird. Dabei können auch Zeit-Informationen verwendet werden.

Es ist die Aufgabe der Erfindung, eine Einrichtung zur Planung und Bahnführung beim Absetzen von Fallschirmen sowie entsprechende Verfahren bereitzustellen, die weitgehend unabhängig von atmösphärischen Bedingungen ist, mit möglichst einfachen technischen Mitteln realisiert werden kann und auch für eine große Anzahl von Fall- oder Gleitschirmen geeignet ist.

Diese Aufgabe wird mit den Merkmalen der unabhängigen Patentansprüche gelöst. Weitere Ausführungsformen sind in deren Unteransprüchen angegeben.

Erfindungsgemäß kann ein sehr einfaches System zur Bahn-Führung und -Steuerung kommen, da lediglich eine Uhr und ein Druckmesser zur Bestimmung der Ist-Werte und eine Vergleichseinrichtung, zum Vergleich dieser mit den Soll-Höhen-Zeit-Koordinaten erforderlich ist. Das erfindugnsgemäße Plaungseinrichtung ist ebenfalls sehr einfach ausführbar, da zur Ermittlung der Soll-Vorgaben in Form des Höhen-Zeit-Koordinaten einfache Berechnungen ohne aufwendige Modelle, z.B. zu Windprofilen oder Druckverhältnissen verwendet werden können. Das erfindungsgemäße System zur Bahn-Führung und -Steuerung ist auch nicht störanfällig, was bei militärischen Einsätzen von großer Bedeutung ist. Dadurch, daß auf ein Satelliten-Navigationsgerät verzichtet werden kann, wird der Einsatz im ungünstigen Gelände wie z.b. im Gebirge, in dem der Empfang nicht in jeder Flugphase sichergesellt ist. Diese Nachteile werden durch den erfindungsgemäßen Ansatz überwunden.

Beim Absetzen einer großen Zahl von Fallschirmen wird durch die Verwendung von Höhen-Zeit-Koordinaten für die Soll-Bahn und die Bahnführung und -Steuerung sichergestellt, daß lokale Wind- und Druck-Verhältnisse keine Unsicherheit bezüglich der Einhaltung von Mindestabständen zwischen den Fallschirmen auftreten kann und auf diese Weise Kollisionen mit großer Zuverlässigkeit vermieden werden können.

Im folgenden wird die Erfindung anhand der beiliegenden Figur beschrieben, die zeigen

- Figur 1 eine schematische Darstellung des erfindungsgemäßen Bahnführungs-Systems für einen Fall- oder Gleitschirm und die diesem zugeordnete erfindungsgemäße Einsatzsteuerungs-Einrichtung,

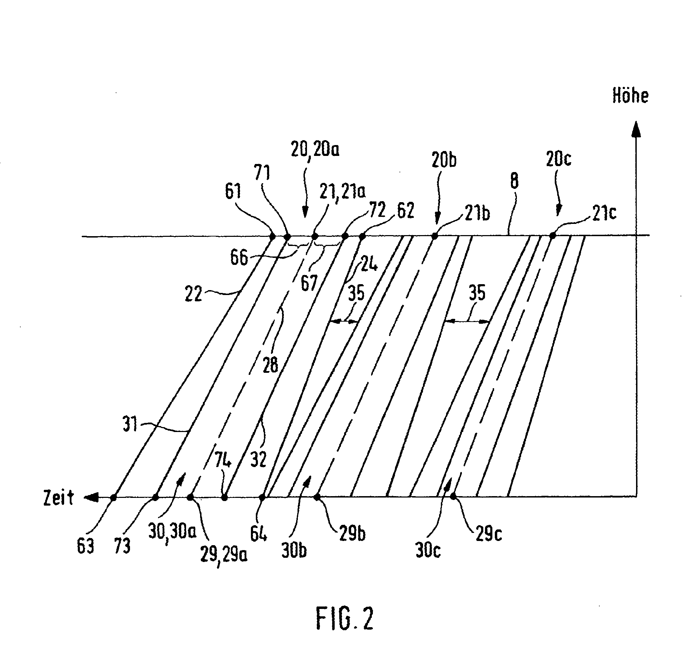

- Figur 2 eine schematische Darstellung von drei beispielhaften Bahnführungs-Korridoren und zugeordneten Höhen-Zeit-Linien nach der Erfindung, die zusammen eine erfindungsgemäße Korridor-Anordnung bilden,

- Figur 3 vier einzelne Diagramme mit jeweils einem Höhen-Zeit-Korridor und der zugeordneten Referenzlinie, wobei die vier Korridore sich nicht gegenseitig überlappen und zusammen eine erfindungsgemäße Korridor-Anordnung darstellen.

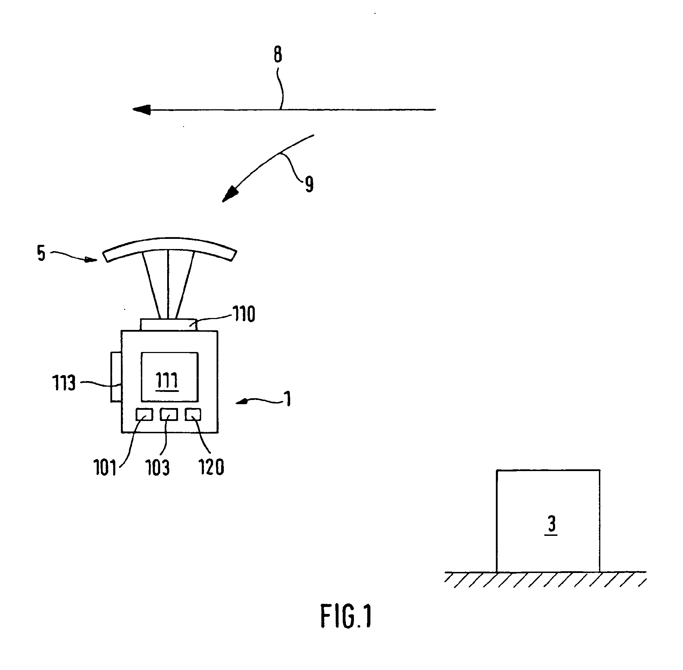

Figur 1 zeigt ein Bahnführungs-System 1 für einen Fall- oder Gleitschirm und ein Einsatz-System oder eine Flugbahn-Planungseinrichtung 3 nach der Erfindung, das für das Bahnführungs-System 1 verwendbar ist. Das Bahnführungs-System 1 für einen Fall- oder Gleitschirm ist Teil einer von einem Fall- oder Gleitschirm 5 getragenen Last 6, die auch eine Person umfassen kann. Der Fall- oder Gleitschirm 5, der sich nach der Darstellung der Figur 1 im fliegenden Zustand befindet, ist von einem Flugzeug 7 abgesetzt worden, dessen Flugbahn bzw. dessen Soll-Höhenlinie symbolisch durch einen Pfeil 8 dargestellt ist. Die Flugbahn des Fall- oder Gleitschirms 5 ist symbolisch durch einen Pfeil 9 dargestellt.

Das Bahnführungs-System 1 für einen Fall- oder Gleitschirm umfaßt ein Flugbahn-Kontrollsystem 111, das Steuer-Vorgaben zur Steuerung des Bahnführungs-Systems 1 für einen Fall- oder Gleitschirm ermittelt, sowie eine Mensch-Maschine-Schnittstelle 113, die z.B. eine Anzeige oder einen Lautsprecher umfassen kann.

Der Fall- oder Gleitschirm 5, für den das erfindungsgemäße Bahnführungs-System 1 bzw. das zugehörige Verfahren vorgesehen ist, kann bemannt oder unbemannt sein. In dem Falle, in dem der Fall- oder Gleitschirm 5 unbemannt ist, weist das Fall- oder Gleitschirm-System 1 weiterhin eine Steuereinheit 110 zur Steuerung des Fall- oder Gleitschirms 5 mit einer Stelleinheit zur Verstellung dessen Steuerflächen auf. Eine solche Steuereinheit 110 mit Stelleinheit kann optional auch in dem erfindungsgemässen Bahnführungs-System 1 für einen bemannten Fall- oder Gleitschirm 5 vorgesehen sein.

Das Einsatz-System 3 bzw. das dafür vorgesehene Verfahren ermittelt Bahnführungs-Vorgaben für ein einzelnes Bahnführungs-System eines Fall- oder Gleitschirms 5 oder für Bahnführungs-Systeme 1 von Fall- oder Gleitschirmen 5 eines Fall- oder Gleitschirm-Verbandes, wobei eine Flugzeug-Sollbahn 8, von der der zumindest eine Fall- oder Gleitschirm 5 abgesetzt wird, als Bezugslinie verwendet wird. Das Einsatz-System 3 kann als Bodenstation, als mobiles Gerät oder als ein im Flugzeug mitgeführtes oder eingebautes Gerät ausgestaltet sein.

Im folgenden werden das erfindungsgemäße Einsatz-System 3 und entsprechende Verfahren beschrieben:

Das Einsatz-System 3 ermittelt für zumindest einen Fall- oder Gleitschirm 5 Bahnführungs-Vorgaben in Form eines oder mehrerer Höhen-Zeit-Korridore oder in einem alternativen Bahnführungs-Konzept in Form einer Höhen-Zeit-Linie je zu führenden Fall- oder Gleitschirms 5 oder in einer daraus abgeleiteten Form. Die Höhen-Zeit-Linie bzw. der Höhen-Zeit-Korridor sind jeweils durch ihren Höhenverlauf in Abhängigkeit von der Zeit auf der Basis von angenommenen Sink-Geschwindigkeiten, die auch Höhen- und Zeit-abahängig sein können, bestimmt.

Der zur Bildung der erfindungsgemäßen Bahnführungs-Vorgaben verwendete Höhen-Zeit-Korridor kann ein Soll-Korridor 20 oder ein Sicherheits-Korridor 30 sein oder alternativ sowohl einen Soll-Korridor 20 als auch einen Sicherheits-Korridor 30 umfassen. Diese Korridore 20 bzw. 30 stellen jeweils einen durch Höhe und Zeit bestimmten zulässigen Höhen-Zeit-Bereich oder Soll-Bereich bzw. einen Sicherheits-Bereich dar, in dem der jeweilige Fall- oder Gleitschirm 5 mit Hilfe der vom Bahnführungs-System 1 erstellten Vorgaben geführt wird. Der zumindest eine Höhen-Zeit-Korridor 20, 30 bzw. die zumindest eine Höhen-Zeit-Linie kann zum einen aufgrund eines vorgegebenen oder mittels des Einsatz-Systems 3 ermittelten Start- oder Absetzpunktes 21 gebildet werden, der durch eine Höhe und einen Zeitpunkt festgelegt und im allgemeinen vom geographischen Ort unabhängig ist. Der Absetzpunkt 21 kann sich insbesondere auf der Flugzeug-Sollbahn 8 befinden oder kann unabhängig von dieser ein fiktiver Absetzpunkt sein, der wiederum durch eine bestimmte Höhe und einen bestimmten Zeitpunkt festzulegen ist. Zum anderen kann der Höhen-Zeit-Korridor 20, 30 bzw. die Höhen-Zeit-Linie aufgrund eines Aufsetzpunktes 29, der durch seine Höhe und einen Zeitpunkt bestimmt ist, gebildet werden.

Bei der Bildung des Soll-Korridors 20 durch das Einsatzsystem 3 wird der Soll-Korridor 20 definiert durch eine erste oder obere Soll-Höhen-Zeit-Linie 22, die von einer minimalen Sinkrate des Fall- oder Gleitschirms 5 abgeleitet wird, und durch eine zweite oder untere Soll-Höhen-Zeit-Linie 24, die von einer maximalen Sinkrate des Fall- oder Gleitschirms abgeleitet wird. Die minimale und maximale Sinkrate kann jeweils aus einer Nominal-Sinkrate oder direkt ermittelt werden. Eine Nominal-Sinkrate ergibt eine Referenz-Höhen-Zeit-Linie 28, die ebenfalls in dem Einsatzsystem 3 ermittelt werden kann. In einem - im allgemeinen zeit-abhängigen - Abstand von einer Soll-Höhen-Zeit-Linie 22, 24 in Richtung zur jeweils zugeordneten Soll-Höhen-Zeit-Linie desselben Korridors befinden sich Sicherheits-Höhen-Zeit-Linien 31, 32 zur Bildung des Sicherheits-Korridors 30.

Alternativ dazu kann die Bildung des Soll-Korridors 20 durch das Einsatzsystem 3 auch aus der Nominal-Sinkrate und der daraus abgeleiteten Referenz-Höhen-Zeit-Linie 28 erfolgen. Daraus können die Soll-Höhen-Zeit-Linien 22, 24 in einem im allgemeinen Höhen- und Zeit-abhängigen Abstand zur Referenz-Höhen-Zeit-Linie 28 ermittelt werden.

Es kann weiterhin ein innerhalb des Soll-Korridors 20 gelegener Sicherheits-Höhen-Zeit-Korridor oder Sicherheits-Korridor 30 vorgesehen sein, der von einer ersten oder oberen Sicherheits-Höhen-Zeit-Linie 31 und einer zweiten oder unteren Sicherheits-Höhen-Zeit-Linie 32 begrenzt wird. Die erste 31 und die zweite Sicherheits-Höhen-Zeit-Linie 32 ist jeweils von der ersten Soll-Höhen-Zeit-Linie 22 bzw. der zweiten Soll-Höhen-Zeit-Linie 24 einen über die Höhe konstanten oder variablen Abstand entfernt und liegt bezüglich dieser jeweils auf der Seite der Referenzlinie 28. Das Einsatz-System 3 kann auch derart gestaltet sein, daß es lediglich Sicherheits-Höhen-Zeit-Korridore 30 aus entsprechenden Gleichungen direkt, d.h. ohne die Bildung der ersten 22 und der zweiten Soll-Höhen-Zeit-Linie 24 ermittelt.

Zur Bildung der Soll-Höhen-Zeit-Linien 22, 24, der Sicherheits-Höhen-Zeit-Linien 31, 32 und der Referenz-Höhen-Zeit-Linie 28 kann jeweils von einem in Zeitpunkt und Höhe bestimmten Anfangspunkt, der der Absetz- oder Startpunkt 21 ist oder von diesem abgeleitet ist, oder von einem Endpunkt, der der Aufsetzpunkt 21 ist oder von diesem abgleitet ist, allgemein also von einem Bezugspunkt ausgegangen werden, wobei der Bezugspunkt nach einer Höhen- und einer Zeit-Koordinate festgelegt ist. Für jeden Zeitpunkt ergibt sich einPunkt der jeweiligen daraus erfindungsgemäß ermittelten Höhen-Zeit-Linie 22, 24, 31, 32, 28, indem aus der zu dem jeweiligen Bezugspunkt gehörigen Höhe eine Höhen-Differenz ausgehend von einem Landepunkt als Bzeugspunkt addiert oder ausgehend von einem Absetzpunkt als Bezugspunkt subtrahiert wird. Dabei ergibt sich diese Höhen-Differenz aufgrund einer angenommenen oder ermittelten Sinkrate des jeweils verwendeten Fall- oder Gleitschirms 5 und einer gegebenen. Die von einem Bezugspunkt aus zu subtrahierende bzw. zu addierende Höhe wird aus dem Integral der jeweiligen Sinkrate über die von dem zum Bezugspunkt gehörenden Bezugs-Zeitpunkt aus laufende Zeit gebildet.

In mathematischer Schreibweise ergibt sich die zu einem bestimmten Zeitpunkt gehörende Höhe H ausgehend von einem Bezugspunkt mit der Höhe $H_a$ aufgrund einer Sinkbewegung mit der Geschwindigkeit v:

$$H = H_a - \int\limits_{t_a}^{t} v \bullet dt$$

Die zu einem bestimmten Zeitpunkt gehörende Höhe H ausgehend von einem vorgegebenen Endpunkt der Bahn des Gleit- oder Fallschirms als Bezugspunkt mit der Höhe $H_e$ ergibt sich bei einer Betrachtung entgegen der Zeitrichtung aufgrund einer fiktiven Aufwärtsbewegung des Schirms mit der Geschwindigkeit v:

$$H = H_e + \int\limits_{t_e}^{t} v \bullet dt$$

Dabei bedeuten die einzelnen Bezeichnungen:

H - Höhe der zu ermittelnden Höhen-Zeit-Koordinate einer Höhen-Zeit-Linie,

t - der zu H gehörende Zeitpunkt,

$H_a$ - Anfangs-Höhe eines Bezugspunktes bei einer Betrachtung der Bewegung in der Zeitrichtung,

$t_a$ - die zu $H_a$ gehörige Anfangs-Zeit,

$H_e$ - End-Höhe eines Bezugspunktes bei einer Betrachtung der Bewegung entgegen der Zeitrichtung,

$t_e$ - die zu $H_e$ gehörige End-Zeit,

v - die Sinkgeschwindigkeit des Fall- oder Gleitschirms 5, die insbesondere eine Funktion der Höhe H sein kann.

Als Sinkgeschwindigkeit kann je nach der zu ermittelnden Höhen-Zeit-Koordinate einer Höhen-Zeit-Linie 22, 24, 31, 32, 28 wie beschrieben, eine nominale, eine minimale oder eine maximale Sinkgeschwindigkeit verwendet werden.

Bei der Anwendung der Erfindung auf die koordinierte Bahnführung und der Ermittlung entsprechender Bahnführungs-Vorgaben mehrerer Fall- oder Gleitschirme wird erfindungsgemäß der jeweilige Bezugspunkt spezifisch für den jeweiligen Fall- oder Gleitschirm 5 in Zeit und Höhe derart gewählt, daß sich die maßgeblichen Höhen-Zeit-Korridore für verschiedene Fall- oder Gleitschirme 5 nicht überschneiden oder alternativ ein im allgemeinen Höhen- und Zeit-abhängiger Abstand eingehalten wird. Als zur Bestimmung des Abstandes zwischen jeweils maßgeblichen Höhen-Zeit-Korridor kann der Soll-Korridor 20 oder der Sicherheits-Korridor 30 oder beide genannten Korridore oder Kombinationen derselben verwendet werden. Die Korridore für verschiedene Fall- oder Gleitschirme können verschieden gestaltet sein.

Bei der Bestimmung der Bahnführungs-Vorgaben aufgrund der Verwendung von Höhen-Zeit-Linien sind vorbestimmte Mindest-Abstände zwischen den jeweils benachbarten Höhen-Zeit-Linien vorzusehen, die Höhen- und Zeit-abhängig sein können.

Die erste Soll-Höhen-Zeit-Linie 22 weist an einem ersten Ende und möglicherweise auf der Flugzeug-Soll-Höhenlinie 8 gelegenen ersten Start- oder Bezugspunktes 61 und die zweite Soll-Höhen-Zeit-Linie 24 aufgrund eines ebenfalls an deren ersten Ende und möglicherweise auf der Flugzeug-Soll oder Ist-Höhenlinie 8 gelegenen oder bezogenen zweiten Start- oder Bezugspunktes 62 auf. In analoger Weise weisen die Soll-Höhen-Zeit-Linien 22, 24 an ihren zweiten Enden einen ersten 63 und einen zweiten 64 Soll-Endpunkt auf. Die Bildung des erfindungsgemäßen Soll-Korridors 20 kann über die Definition dieser Soll-Start- oder Endpunkte mittels der voranstehenden Formeln unter Verwendung der maßgeblichen Sink-Geschwindigkeit erfolgen. Alternativ können die Soll-Höhen-Zeit-Linien 22, 24 aus der Referenz-Höhen-Zeit-Linie 28 gebildet werden, wobei sich dabei die Soll-Höhen-Zeit-Linien aus der Referenz-Höhen-Zeit-Linie 28 durch Addition bzw. Subtraktion eines im allgemeinen Höhen- und Zeit-abhängigen Abstandes ergeben.

In einer weiteren Ausführungsform der Erfindung werden die Höhen-Zeit-Linien ausgehend von einem Höhen-Punkt einer ersten Höhen-Zeit-Linie, z.B. der Referenz- oder einer ersten Soll- oder Sicherheits-Höhen-Zeit-Linie durch Addition eines entsprechenden zeitlichen Abstandes gebildet.

Die Soll-Start- oder Endpunkte 61, 62, 63, 64 für die erste 22 und zweite 24 Soll-Höhen-Zeit-Linie können dabei auch unabhängig von der Flugzeug-Soll- bzw. Ist-Höhenlinie 8 definiert sein. Der erste 61 und der zweite 62 Soll-Startpunkt kann auch als identisch mit dem Absetzort 21 festgelegt werden, d.h. diese können auch identisch sein. Vorzugsweise ist der erste Soll-Startpunkt 61 für eine erste Höhen-Zeit-Linie in einem ersten Abstand 66 z.B. in Flugrichtung vor und der zweite Soll-Startpunkt 62 für eine zweite Höhen-Zeit-Linie in einem zweiten Abstand 67 z.B. in Flugrichtung hinter dem Absetzpunkt 21 oder einem anderen Bezugspunkt entfernt gelegen, wobei der erste Abstand 66 im Betrag gleich dem zweiten Abstand 67 sein kann. Vorzugsweise ist der erste Abstand 66 aufgrund der Geschwindigkeit des den Fall- oder Gleitschirm absetzenden Flugzeugs um einen Betrag größer als der zweite Abstand 67, wobei dieser Betrag von der Flugzeug-Geschwindigkeit abhängt. Analoges gilt für die Soll-Endpunkte 63, 64. Die angeführten Randbedingungen können aufgrund einer Abschätzung der lokalen atmosphärischen Bedingungen oder aufgrund von Berechnungen getroffen werden.

Analog kann die Bestimmung der Sicherheits-Höhen-Zeit-Linien 31, 32 über einen entsprechenden ersten 71 und zweiten 72 Start-Bezugspunkt bzw. einen entsprechenden ersten 73 und zweiten 74 End-Bezugspunkt erfolgen. Entsprechend kann erfindungsgemäß die Bildung des Sicherheits-Höhen-Zeit-Korridors 30 über die Definition von Start- bwz. End-Bezugspunkte erfolgen.

Die Soll-Korridore 20, Sicherheits-Korridore 30 oder im alternativen Behnführungs-Konzept Höhen-Zeit-Linie können jedoch auch relativ zueinander durch Addition eines zeitlichen Abstandes zwischen jeweils benachbarten Korridoren bzw. Höhen-Zeit-Linien gebildet werden.

Es kann eine zwischen der ersten Soll-Höhenlinie 22 und der zweiten Soll-Höhenlinie 24 gelegene mittlere Höhen-Zeit-Linie oder Referenzlinie 28 bestimmt werden, die den Absetzpunkt 21 sowie einen mittleren oder Referenz-Aufsetzpunkt 29 oder aus diesen abgeleitete Punkte durchläuft. Es kann die Bildung der Referenzlinie 28 auch aus zumindest einer Soll-Höhen-Zeit-Linie 22, 24 erfolgen.

Die erste Soll- Höhen-Zeit-Linie 22 und die zweite Soll- Höhen-Zeit-Linie 24 werden zumindest bezüglich ihres Höhenverlaufs in Abhängigkeit der Zeit bestimmt. Demgemäß sind der Absetzpunkt 21, der Aufsetzpunkt 29, sowie die Bezugspunkte 71, 72, 73, 74 nach der Höhe und der Zeit festgelegt.

Der Verlauf der Höhen-Zeit-Linien 22, 24, 31, 32, 28 ergibt sich aus der erwarteten minimalen bzw. maximalen bzw. nominalen Sinkrate. Die jeweils relevante oder in einer Ausführungsform angewendete Sinkrate kann im Einsatzsystem 3 aufgrund vorbestimmter Annahmen festgesetzt werden, experimentell ermittelt werden oder auch aus Einflußgrößen ermittelt werden. Als Einflußgrößen können vorteilhafterweise die atmosphärischen oder Wind-Bedingungen, die Luftdichte in Abhängigkeit der Höhe oder Fall- oder Gleitschirm-Parameter verwendet werden. Als Fall- oder Gleitschirm-Parameter können insbesondere die Masse des Fall- oder Gleitschirms und der Behängung, also des Piloten mit Last, sowie Auftriebskoeffizienten, die Effektivität der Steuerflächen in Abhängigkeit des Stellweges der Steuerleinen und die Fläche des Fall- oder Gleitschirms in die Bestimmung der Sinkraten einbezogen werden. Die Wind-Bedingungen können mittels eines geeigneten Windmodells, mittels der Annahme von Störungen wie z.B. maximale Auf- und Abwinde oder mittels sonstiger Annahmen über die Windverhältnisse erfaßt und in die Sinkraten-Ermittlung einbezogen werden.

Die Ermittlung der minimalen und maximalen Sinkrate kann auf verschiedene Weise erfolgen. Vorzugsweise wird von einer Standard- oder nominalen Sinkrate ausgegangen, die beispielsweise aufgrund von experimentellen Verfahren ermittelt worden sind. Die Wirkung der genannten oder gegebenenfalls auch weiterer Einflußgrößen auf die minimale und maximale Sinkrate kann ausgehend von einer minimalen und maximalen Referenz-Sinkrate über Abweichungen erfolgen, die über Maßzahlen der Einflußgrößen und Gewichtungsfaktoren ermittelt werden.

Die Verläufe der Soll-Höhen-Zeit-Linien 22, 24 sowie der Sicherheits-Höhen-Zeit-Linien 31, 32 und der Referenz-Linie 28 können je nach der Berücksichtigung der Einflußgrössen geradlinig oder auch kurvig gestaltet sein.

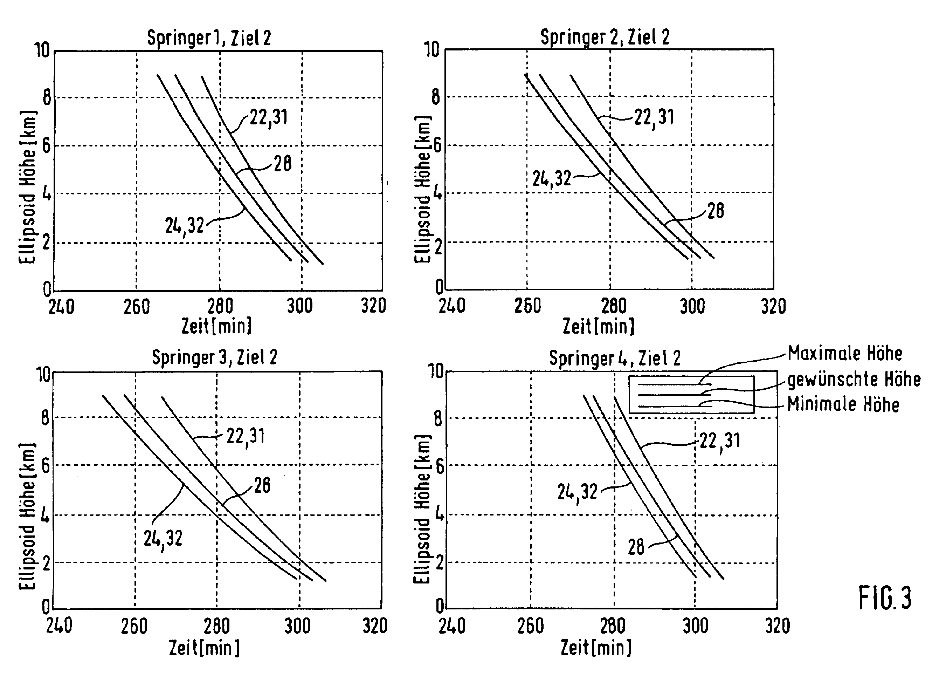

Das erfindungsgemäße Einsatz-System 3 kann auch mehrere Soll-Höhen-Zeit-Korridore 20a, 20b, 20c und/oder zugehörige Sicherheits- Höhen-Zeit-Korridore 30a, 30b, 30c ermitteln (Fig. 3). Zumindest die Sicherheits-Höhen-Zeit-Korridore und gegebenenfalls die Soll-Höhen-Zeit-Korridore für verschiedene Fall- und Gleitschirme 5 sind generell in einer vorbestimmten Weise relativ zueinander und insbesondere derart relativ zueinander gelegen, daß sie sich zu einem Zeitpunkt nicht überlappen. Vorzugsweise kann zwischen den Soll Höhen-Zeit-Korridoren bzw. den Sicherheits- Höhen-Zeit-Korridoren ein Korridor-Abstand 35 vorgesehen sein.

Eine von dem Einsatz-System 3 ermittelte Mehrzahl von Höhen-Zeit-Korridoren bzw. Sicherheits-Höhen-Zeit-Korridoren ist für eine Mehrzahl von Fall-oder Gleitschirmen 5 vorgesehen, wobei jedem Fall- oder Gleitschirm 5 ein Soll-Höhen-Zeit-Korridor bzw. Sicherheits- Höhen-Zeit-Korridor zugeordnet wird.

Die Ermittlung der Soll-Höhen-Zeit-Korridore 20 bzw. Sicherheits-Höhen-Zeit-Korridore 30 oder alternativ der Höhen-Zeit-Linien erfolgt zu dem Zweck, die Flugbahn eines Fall- oder Gleitschirms 5 oder mehrerer Fall- oder Gleitschirme zu koordinieren. Die Führung nur eines Fall- oder Gleitschirmes 5 kann dazu vorgesehen sein, das Aufsetzen des Fall- oder Gleitschirms 5 im Gelände in einem vorbestimmten Zeitfenster sicherzustellen. Bei der Ermittlung mehrerer Höhen-Korridore bzw. operationellen Höhen-Korridore oder alternativ von Höhen-Zeit-Linien für mehrere Fall- oder Gleitschirme sind diese vorzugsweise dazu vorgesehen, jeden Fall- oder Gleitschirm in einer für diesen sicheren Bereich zu führen und eine Kollision mit einem anderen Fall- oder Gleitschirm 5 zu vermeiden.

Die Soll-Höhen-Zeit-Korridore 20 bzw. Sicherheits-Höhen-Zeit-Korridore 30 oder alternativ Höhen-Zeit-Linien können innerhalb des Einsatz-Systems 3 oder einer weiteren KontrollEinheit zur Planung und Kontrolle von Fall- oder Gleitschirm-Einsätzen vorgesehen sein. Fall- oder Gleitschirm-Piloten können diese Soll-Höhen-Zeit-Korridore 20 bzw. Sicherheits-Höhen-Zeit-Korridore 30 mit oder ohne einem Bahnführungs-System 1 nutzen. Ohne Bahnführungs-System 1 können die Korridore den Piloten als Orientierung dienen. Ein alternatives erfindungsgemäßes Bahnführungs-System 1 ermittelt für den Fall- oder Gleitschirm-Piloten konkrete Bahnführungs-Vorgaben, um diese ihm auch anzuzeigen.

Die Übermittlung von Daten zur Beschreibung des für ein konkretes Fall- oder Gleitschirm-System vorgesehenen Soll-Höhen-Zeit-Korridors 20 bzw. Sicherheits-Höhen-Zeit-Korridors 30 oder alternativ von Höhen-Zeit-Linien von dem Einsatz-System 3 zu dem jeweiligen Bahnführungs-System 1 kann zum einen vor dem jeweiligen Fall- oder Gleitschirm-Flug manuell oder über eine Daten-Leitung erfolgen. Zum anderen kann diese Übertragung auch während des Fluges per Funk-Verbindung erfolgen.

Die erfindungsgemäße Flugbahn-Planungseinrichtung zur Ermittlung von Bahnführungs-Vorgaben für zumindest einen Fall- oder Gleitschirm 5 ermittelt die einen Höhen-Zeit-Korridor 20, 30 als ein von dem Fall- oder Gleitschirm 5 einzuhaltender Flugbereich ermittelt, dessen Grenzen aus Höhen-Zeit-Linien 22, 24; 31, 32 auf der Basis eines durch eine Höhen- und eine Zeit-Koordinate bestimmten Bezugspunktes gebildet werden, wobei der Verlauf der Höhen-Zeit-Linien 22, 24; 31, 32 jeweils aus dem Integral einer vorbestimmten Sinkrate v über die Zeit gebildet wird und wobei den Höhen-Zeit-Linien 22, 24; 31, 32 verschiedene Sinkraten zugeordnet werden. Der Höhen-Zeit-Korridor kann aus einer ersten Höhen-Zeit-Linie auf der Basis einer maximalen Sinkrate und aus einer ersten Höhen-Zeit-Linie auf der Basis einer minimalen Sinkrate des Fall- oder Gleitschirms gebildet sein. Alternativ ermittelt die Flugbahn-Planungseinrichtung eine Höhen-Zeit-Linie 28 auf der Basis eines durch eine Höhen- und eine Zeit-Koordinate bestimmten Bezugspunktes als ein von dem Fall- oder Gleitschirm in einem vorbestimmten Abstand einzuhaltende Soll-Linie, deren Verlauf aus dem Integral einer vorbestimmten Sinkrate (v) über die Zeit gebildet wird.. Der Bezugspunkt kann ein Absetzpunkt oder ein Aufsetzpunkt sein. Erfindungsgemäß können insbesondere mehrere Höhen-Zeit-Korridore 20, 30 bzw. mehrere Höhen-Zeit-Linien 28 verwendet sind, die bezüglich des Zeit-Koordinate voneinander konstant oder zeit-abhängig gestaffelt sind, um das Absetzen einer großen Zahl von Fall- oder Gleitschirmen zu ermöglichen.

Dementsprechend ist erfindungsgemäß ein zur Implementierung in ein Computerprogramm-System vorgesehenes Verfahren zur Ermittlung von Bahnführungs-Vorgaben zur Steuerung von Fall- oder Gleitschirmen vorgesehen, bei dem der beschriebene Höhen-Zeit-Korridor 20, 30 bzw. die Soll-Höhen-Zeit-Linie 28 ermittelt wird.

Erfindungsgemäß ist auch ein Bahnführungs-System und entsprechende Verfahren zur Implementierung in einem solchen Bahnführungs-System beschrieben:

Das erfindungsgemäße Bahnführungs-System 1 als Teil eines Fall- oder Gleitschirm-Systems verwendet Daten zur Beschreibung zumindest eines entsprechenden Soll-Höhen-Zeit-Korridors 20 bzw. Sicherheits-Höhen-Zeit-Korridors 30 oder alternativ zumindest einer Höhen-Zeit-Linie, die von einer Plaungseinrichtung übermittelt oder manuell eingegeben worden sind. Insbesondere bei der manuellen Eingabe können Berechnungsalgorithmen Bahnführungs-System 1 implementiert sein, so daß nur sehr wenige oder einfache Eingaben, z.B. eine nominelle Sinkrate des Fall- oder Gleitschirms 5 oder eine maximale oder minimale Sinkrate erforderlich sind. Das Bahnführungs-System 1 ermittelt aufgrund der Bahnführungs-Vorgaben in Form der Höhen-Zeit-Linie oder des Höhen-Zeit-Korridors sowie der momentanen Höhen-Zeit-Koordinate, an der sich der Fall- oder Gleitschirm befindet, Bahnsteuerungs-Maßnahmen oder Vorgaben. Diese können zu einer Anzeige oder allgemein an eine Mensch-Maschine-Schnittstelle (MMI) übermittelt werden, so daß ein Pilot diese bei der Steuerung des Schirms entsprechend umsetzen kann. Das MMI kann auch in einer externen Einheit, z.B. in einer Bodenstation oder in einem Flugzeug vorhanden sein, um den Schirm oder die Schirme von dort über Sende-Empfangs-Einrichtungen zu steuern. Alternativ oder zusätzlich können diese Informationen auch an ein Kontrollsystem 111 oder eine entsprechende Einheit gesendet werden, das aus Soll-Ist-Differenzen Steuerungs-Kommandos ermittelt, die ebenfalls an das MMI oder eine entsprechende Aktuatorik gesendet werden, die den Schirm automatisch in bezug auf die Soll-Vorgaben steuert.

Dem erfindungsgemäßen Bahnführungs-System 1 ist eine Höhen-Meßeinrichtung 101 sowie eine Zeit-Meßeinrichtung 103 zugeordnet. Die Höhen-Meßeinrichtung 101 kann durch ein Satelliten-Höhenmeßgerät oder ein Satelliten-Navigationsgerät oder eine Druckmeß-Dose oder eine andere Höhen-Meßeinrichtung nach dem Stand der Technik realisiert sein. Mit Hilfe der Höhen-Meßeinrichtung 101 ermittelt das Bahnführungs-System 1 oder das Flugbahn-Kontrollsystem 11 die momentane Höhe des Fall- oder Gleitschirms und mit der Zeit-Meßeinrichung 103 den momentanen Zeitpunkt.

Ein Flugbahn-Kontrollsystem 111 ordnet zu einem oder für einen bestimmten Zeitpunkt die momentane Höhen-Koordinate der entsprechenden Höhe-Koordinate von einer Grenzlinie oder beiden Grenzlinien des erfindungsgemäßen Höhen-Zeit-Korridors bzw. Sicherheits-Höhen-Zeit-Korridors oder der Höhen-Koordinate von einer anderen maßgebenden Höhen-Zeit-Linie zu. Bei dem alternativen Bahnführungskonzept wird die momentane Höhen-Koordinate der entsprechenden Höhen-Koordinate einer entsprechenden erfindungsgemäßen Höhen-Zeit-Linie zugeordnet.

Das erfindungsgemäße Bahnführungs-Systems 1 verwendet also eine Höhen-Zeit-Vorgabe für die Bahnkurve des betreffenden Fall- oder Gleitschirms 5 und nimmt einen Vergleich der Höhen-Zeit-Vorgabe mit der Ist-Zeit und der Ist-Höhe vor. Daraus kann eine Darstellung über die Ist-Höhe relativ zur Höhen-Zeit-Vorgabe zur Anzeige durch eine Mensch-Maschine-Schnittstelle (MMI) 113 erstellt werden. Dabei kann das Flugbahn-Kontrollsystem 111 insbesondere die für den aktuellen Zeitpunkt oder Iterationsschritt minimale und maximale Sollhöhe und die Ist-Höhe des Fall- oder Gleitschirms ermittelt werden. Dies gilt auch für die automatische Steuerung.

Alternativ oder zusätzlich zu einer Darstellung der relativen Ist-Höhe kann eine Steuerungs-Vorgabe an den Piloten vermittelt werden, wobei die Steuerungs-Vorgabe eine zu erreichende Höhen-Zunahme oder Höhen-Abnahme in visueller Form mittels einer Bild-Darstellung und zusätzlich oder alternativ in auditiver Form mittels eines Sprech-Systems umfaßt. Dabei kann diese Vorgabe in absoluten Werten oder in Bezug eine Bahn-Vorgabe, wie z.B. einer Soll-Höhen-Zeit-Linie gemacht werden. Die MMI gibt dem Piloten an, ob er sich noch im zulässigen und/oder sicheren Höhen-Zeit-Bereich befindet. Der zulässige Höhenbereich wird umgrenzt durch die Soll-Höhen-Zeit-Linien. Der sichere Höhen-Zeit-Bereich wird umgrenzt durch die Sicherheits-Höhen-Zeit-Linien. Die Abweichung von einer Soll-Höhen-Zeit-Linie oder Grenzlinien des maßgebenden Höhen-Zeit-Korridors kann auch analog mittels eines Zeigerinstruments oder auch mittels zumindest eines Farbfeldes aangegeben werden. So könnte die Farbe rot bedeuten, daß der Pilot maximal oder nahezu maximal in eine bestimmte Richtung zu steuern hat. Die Richtung, d.h. ob eine möglichst geringe oder große Sinkrate gefordert ist, kann durch Zusatzinformationen vermittelt werden. In Frage kommt dabei die Form des jeweils verwendeten Farbfeldes oder dieWahl oder Positioin des Farbfeldes. Grün könnte dabei bedeuten, daß keine zusätzliche Steuerungsmaßnahme erforderlich ist. Eine dritte Farbe, wie z.B. gelb, könnte einen Zwischenberiech in bezug auf die erforderliche Steuerungsmaßnahme bedeuten. Anstelle der beispielhaft genannten Farben können nach ergonomischen Gescihtspunkten andere Farben für die Farbfelder verwendet werden.

Alternativ oder zusätzlich kann auch auf andere Weise angegeben werden, welche Maßnahme der Pilot auszuführen hat, um im zulässigen oder sicheren Höhen-Zeit-Bereich zu fliegen. Dabei können verbale Kommandos verwendet werden, die dem Piloten die Abweichung von der mittleren Soll-Höhenlinie oder Referenzlinie 28 und/oder den Abstand zu den betreffenden Punkten der Soll-Höhen-Zeit-Linien 22, 24 und/oder zu den Soll-Höhen-Zeit-Linien 31, 32 angeben. Ein Kommando kann lauten: "Sinkflug verringern" oder "sicherer Höhenbereich unterschritten". Diese Kommandos können auch auf der Basis entsprechender Differenzen mit laufenden Entfernungs-Angaben zu den relevanten Soll-Höhen-Zeit-Linien 22, 24, Sicherheits-Höhen-Zeit-Linien 31, 32 oder der Referenzlinie 28 gemacht werden.

In einer weiteren Ausführungsform des erfindungsgemäßen Bahnführungs-Systems 1 ermittelt dieses zusätzlich aufgrund einer entsprechenden Sink-Geschwindigkeit des Fall- oder Gleitschirms 5 eine prognostizierte räumliche Bahnkurve oder auch einen prognostizierten, räumlich festgelegten Aufsetz-Zeitpunkt und vermittelt diese bzw. diesen in visueller Form mittels einer Bild-Darstellung und zusätzlich oder alternativ in auditiver Form mittels eines Sprech-Systems dem Piloten. Bei dieser Darstellung kann auch dargestellt werden die bisherige Flugbahn in den Raum-Koordinaten und/oder in den Höhen-Zeit-Koordinaten, der Soll-Höhen-Zeit-Korridor 20 und/oder der Sicherheits-Höhen-Zeit-Korridor 30 und/oder die Referenz-Höhen-Zeit-Linie 28 oder bei dem alternativen Bahnführungskonzept eine Höhen-Zeit-Linie, dem bzw. der der jeweilige Fall- oder Gleitschirm 5 zugeordnet ist und/oder weitere dieser Vorgaben. Insbesondere können neben diesen Vorgaben örtlich benachbarte Vorgaben und gegebenenfalls über Funk dem Bahnführungs-System 1 übertragene Ist-Positionen oder bisherige Flugbahnen benachbarter Fall- oder Gleitschirme angezeigt werden. Abstände zu diesen Bahn-Vorgaben und daraus resultierende Steuerungs-Vorgaben können dem Piloten auch auditiv mittels des Sprechsystems mitgeteilt werden.

Bei der Ermittlung der prognostizierten Bahnkurve können auch weitere Funktionen oder Werte einfliessen, wie z.B. ein atmosphärisches Höhen-Profil. Dabei kann von einem Geradeausflug oder von einem Kurvenflug, wie z.B. konstante Drehrate, ausgegangen werden. In einer weiteren Ausführungsform kann über die prognostizierte Bahnkurve ein prognostizierter Aufsetz-Zeitpunkt ermittelt und über die Mensch-Maschine-Schnittstelle 113 angegeben werden.

In einer weiteren Ausführungsform des Bahnführungs-Systems 1 weist dieses ein Navigations-System 120 zur Bestimmung der Ist-Position des Fall- oder Gleitschirms 5 auf. In entsprechender Weise vermittelt die Mensch-Maschine-Schnittstelle 110 die Ist-Position des Fall- oder Gleitschirms 5 in Bezug auf vorgegebene Referenzpunkte vorzugsweise in Form einer visuellen Dastellung. Das Bahnführungs-System 1 kann in einer weiteren Ausführungsform Geländedaten in einem entsprechenden Speicherelement eingeladen haben. In diesem Fall kann die Mensch-Maschine-Schnittstelle 113 visuell oder auditiv die Ist-Position in Bezug auf Gelände-Punkte angeben. Dabei können aufgrund der beschriebenen prognostizierten Flugbahn insbesondere auch Warnungen in Bezug auf unerwünschte Aufsetzpunkte im Gelände angegeben werden. Auch kann eine dreidimensionale Bild-Darstellung der Ist-Position in Bezug auf und optional den prognostizierten Aufsetzpunkt und/oder einen vorgegebenen Aufsetzpunkt innerhalb eines ebenfalls dargestellten Geländebereichs angegeben werden. Bei dieser Darstellung kann auch die bisherige Flugbahn, der Soll-Höhen-Zeit-Korridor 20 und/oder der Sicherheits-Höhen-Zeit-Korridor 30 und/oder die Referenz-Höhen-Zeit-Linie 28 oder bei dem alternativen Bahnführungskonzept eine Höhen-Zeit-Linie, dem bzw. der der jeweilige Fall- oder Gleitschirm 5 zugeordnet ist und/oder weitere dieser Vorgaben. Insbesondere können neben diesen Vorgaben örtlich benachbarte Vorgaben und gegebenenfalls über Funk dem Bahnführungs-System 1 übertragene Ist-Positionen oder bisherige Flugbahnen benachbarter Fall- oder Gleitschirme angezeigt werden. Abstände zu diesen Bahn-Vorgaben und daraus resultierende Steuerungs-Vorgaben können dem Piloten auch auditiv mittels des Sprechsystems mitgeteilt werden.

Gerätetechnisch und auch funktional können die beschriebenen Funktionen des Bahnführungs-Systems 1 mit dem Flugbahn-Kontrollsystem 111, der Höhenmeß-Einrichtung 101, der Zeitmeß-Einrichtung 103, gegebenenfalls der Navigations-Einrichtung und der Mensch-Maschine-Schnittstelle in einem oder in mehreren Modulen nach dem Stand der Technik integriert sein.

Bei der Anwendung der Erfindung wird der Pilot mit dem Fall-oder Gleitschirm 5 oder der unbamannte Schirm 5 direkt in dem diesem zugewisenen Soll-Korridor oder Sicherheits-Korridor 30 abgesetzt. In dem alternativen Bahnführungs-Konzept kann der Fall- oder Gleitschirm auch in einem vorgegebenen Abstand zu einer Höhen-Zeit-Linie abgesetzt werden. Alternativ kann der Fall- oder Gleitschirm 5 auch außerhalb des Soll-Korridors 20 bzw. außerhalb des vorgegebenen Abstandes abgesetzt werden. Mit Hilfe der Angaben der Mensch-Maschine-Schnittstelle ist der Pilot durch entsprechende Steuerungs-Bewegungen in der Lage, in dem ihm zugeordneten Soll-Korridor oder in einen vorgebenen Abstand zu einer Soll-Höhen-Zeit-Linie hineinzusteuern oder zu einem vorgegebenen Zeitpunkt zu landen oder im Gelände aufzusetzen. Dasselbe gilt für die automatische Steuerung durch die Steuereinheit 110. Die Steuereinheit 110 kann auch mittels Funk von einer Einsatzstelle aus angesteuert oder auch manuell von einem in einer Einsatzstelle sitzenden Piloten gesteuert werden.

Erfindungsgemäß handelt es sich bei dem Bahnführungs-System um eine Vorrichtung zur Ermittlung von Steuerungs-Vorgaben an eine Mensch-Maschine-Schnittstelle oder eine Steuereinheit zur Steuerung eines Fall- oder Gleitschirms 5, wobei diese eine Höhen-Meßeinrichtung 101 zur Ermittlung der momentanen Höhe des Fall- oder Gleitschirms 5, eine Zeit-Meßeinrichtung 103 und ein Flugbahn-Kontrollsystem 111 aufweist, die die momentane Höhe und Zeit mit einer aus einer Sinkrate v über die Zeit gebildeten Höhen-Zeit-Linie 22, 24; 31, 32; 28 vergleicht, und aus der ermittelten Differenz zu der Höhen-Zeit-Linie Steuerungs-Vorgaben ermittelt, um diese an die Mensch-Maschine-Schnittstelle 110 oder die Steuereinheit 10 zu senden. Die Höhen-Zeit-Linie kann eine einzelne für den jeweiligen Fall- oder Gleitschirm vorgesehene Linie oder eine von zwei Begrenzungslinien eines Höhen-Zeit-Korridors sein. In der letzten Alternative ist jeweils diejenige Linie maßgebend, an der sich der Schirm nach der momentanen Situation, z.B. aufgrund seines Abstandes zu den Linien, zu orientieren hat.

Erfindungsgemäß ist auch ein entsprechendes zur Implementierung in ein Computerprogramm-System vorgesehenes Verfahren zur Ermittlung von Steuerungs-Vorgaben an eine Mensch-Maschine-Schnittstelle oder eine Steuereinheit zur Steuerung eines Fall- oder Gleitschirms 5 vorgesehen. Dabei werden Vorgaben erzeugt, die sich aus dem Vergleich der momentanen Höhen-Zeit-Koordinate des Fall- oder Gleitschirms und zumindest einer vorgegebener Höhen-Zeit-Linie 22, 24; 31, 32 ergibt, deren Verlauf jeweils aus dem Integral einer vorbestimmten Sinkrate (v) über die Zeit gebildet wird.

**Patentansprüche**

1. Flugbahn-Planungseinrichtung zur Ermittlung von Bahnführungs-Vorgaben für zumindest einen Fall- oder Gleitschirm (5), **dadurch gekennzeichnet, dass** die Flugbahn-Planungseinrichtung (1) einen Höhen-Zeit-Korridor (20, 30) als ein von dem Fall- oder Gleitschirm (5) einzuhaltender Flugbereich ermittelt, dessen Grenzen aus Höhen-Zeit-Linien (22, 24; 31, 32) auf der Basis eines durch eine Höhen- und eine Zeit-Koordinate bestimmten Bezugspunktes gebildet werden, wobei der Verlauf der Höhen-Zeit-Linien jeweils aus dem Integral einer vorbestimmten Sinkrate (v) über die Zeit gebildet wird und wobei den Höhen-Zeit-Linien verschiedene Sinkraten zugeordnet werden.

2. Flugbahn-Planungseinrichtung nach dem Anspruch 1, **dadurch gekennzeichnet, dass** die Flugbahn-Planungseinrichtung zumindest zwei Höhen-Zeit-Korridore (20, 30) für jeweils zumindest einen Fall- oder Gleitschirm (5) ermittelt, deren Grenzen voneinander in einem vorbestimmten Höhen- und Zeit-abhängigen Abstand entfernt gelegen sind.

3. Flugbahn-Planungseinrichtung nach dem Anspruch 1 oder 2, **dadurch gekennzeichnet, dass** der Bezugspunkt ein Absetzpunkt oder ein Aufsetzpunkt ist.

4. Flugbahn-Planungseinrichtung nach dem Anspruch 1, 2 oder 3, **dadurch gekennzeichnet, dass** der Höhen-Zeit-Korridor aus einer Höhen-Zeit-Linie auf der Basis einer maximalen Sinkrate und aus einer Höhen-Zeit-Linie auf der Basis einer minimalen Sinkrate des Fall- oder Gleitschirms (5) gebildet wird.

5. Flugbahn-Planungseinrichtung nach dem Anspruch 1, 2 oder 3, **dadurch gekennzeichnet, dass** der Höhen-Zeit-Korridor aus einer nominalen Höhen-Zeit-Linie auf der Basis einer nominalen Sinkrate und die Grenzen des Höhen-Zeit-Korridors durch Differenzen zur nominalen Höhen-Zeit-Linie gebildet werden.

6. Flugbahn-Planungseinrichtung einem der Ansprüche 1 bis 5, **dadurch gekennzeichnet, dass** zusätzlich die dem Verfahren jeweils zugrunde gelegte Sinkrate unter Verwendung des Auftriebkoeffizienten, der Effektivität der Steuerflächen in Abhängigkeit des Stellweges der Steuerleinen und der Fläche des Fall- und Gleitschirms (5) abgeleitet wird.

7. Zur Implementierung in ein Computerprogramm-System vorgesehenes Verfahren zur Ermittlung von Bahnführungs-Vorgaben zur Steuerung von zumindest einem Fall- oder Gleitschirm (5), **dadurch gekennzeichnet, dass** ein Höhen-Zeit-Korridor (20, 30) als ein von dem Fall- oder Gleitschirm (5) einzuhaltender Flugbereich ermittelt wird, dessen Grenzen aus Höhen-Zeit-Linien (22, 24; 31, 32) gebildet werden, deren Verlauf jeweils aus dem Integral einer vorbestimmten Sinkrate (v) über die Zeit gebildet wird, wobei den Grenzen verschiedene Sinkraten zugeordnet werden.

8. Flugbahn-Planungseinrichtung zur Ermittlung von Bahnführungs-Vorgaben für zumindest einen Fall- oder Gleitschirm (5), **dadurch gekennzeichnet, dass** die Flugbahn-Planungseinrichtung (1) als Vorgabe eine Höhen-Zeit-Linie (28) auf der Basis eines durch eine Höhen- und eine Zeit-Koordinate bestimmten Bezugspunktes als eine von dem Fall- oder Gleitschirm (5) in einem vorbestimmten Abstand einzuhaltende Soll-Linie ermittelt, deren Verlauf aus dem Integral einer vorbestimmten Sinkrate (v) über die Zeit gebildet wird.

9. Flugbahn-Planungseinrichtung nach dem Anspruch 8, **dadurch gekennzeichnet, dass** die Flugbahn-Planungseinrichtung zumindest zwei Höhen-Zeit-Linien (28) für jeweils zumindest einen Fall- oder Gleitschirm (5) ermittelt, die voneinander in einem vorbestimmten Höhen- und Zeit-abhängigen Abstand entfernt gelegen sind.

10. Flugbahn-Planungseinrichtung nach dem Anspruch 8 oder 9, **dadurch gekennzeichnet, dass** der Bezugspunkt ein Absetzpunkt oder ein Aufsetzpunkt ist.

11. Flugbahn-Planungseinrichtung einem der Ansprüche 8 bis 10, **dadurch gekennzeichnet, dass** zusätzlich die dem Verfahren jeweils zugrunde gelegte Sinkrate unter Verwendung des Auftriebkoeffizienten, der Effektivität der Steuerflächen in Abhängigkeit des Stellweges der Steuerleinen und der Fläche des Fall- und Gleitschirms (5) abgeleitet wird.

12. Zur Implementierung in ein Computerprogramm-System vorgesehenes Verfahren zur Ermittlung von Bahnführungs-Vorgaben zur Steuerung von zumindest einem Fall-oder Gleitschirm (5), **dadurch gekennzeichnet, dass** eine auf der Basis eines durch eine Höhen- und eine Zeit-Koordinate bestimmten Bezugspunktes gebildete Höhen-Zeit-Linie (22, 24; 31, 32; 28) als eine von dem Fall- oder Gleitschirm (5) in einem vorbestimmten Abstand einzuhaltende Soll-Linie ermittelt wird, deren Verlauf aus dem Integral einer vorbestimmten Sinkrate (v) über die Zeit gebildet wird.

13. Bahnführungs-System zur Ermittlung von Steuerungs-Vorgaben an eine Mensch-Maschine-Schnittstelle (110) oder eine Steuereinheit (10) zur Steuerung eines Fall- oder Gleitschirms (5), **dadurch gekennzeichnet, dass**

dieses eine Höhen-Meßeinrichtung (101) zur Ermittlung der momentanen Höhe des Fall-oder Gleitschirms (5), eine Zeit-Meßeinrichtung (103) und ein Flugbahn-Kontrollsystem (111) aufweist, das die momentane Höhe und Zeit mit den abgespeicherten Grenzen eines aus einer minimalen bzw. maximalen Sinkrate (v) über die Zeit gebildeten Höhen-Zeit-Korridors (20, 30) vergleicht, und aus der ermittelten Differenz der momentanen Ist-Position zu den Grenzen des Korridors Steuerungs-Vorgaben ermittelt, um diese an die Mensch-Maschine-Schnittstelle (110) oder die Steuereinheit (10) zu senden.

14. Zur Implementierung in ein Computerprogramm-System vorgesehenes Verfahren zur Ermittlung von Steuerungs-Vorgaben zur Steuerung von zumindest einem Fall- oder Gleitschirm (5), **dadurch gekennzeichnet, dass**

die momentane Höhe und Zeit mit den abgespeicherten Grenzen eines aus einer minimalen bzw. maximalen Sinkrate (v) über die Zeit gebildeten Höhen-Zeit-Korridors (20, 30) verglichen wird, aus der ermittelten Differenz zu den Grenzen Steuerungs-Vorgaben ermittelt werden und diese an die Mensch-Maschine-Schnittstelle (110) oder die Steuereinheit (10) gesendet werden.

15. Bahnführungs-System zur Ermittlung von Steuerungs-Vorgaben an eine Mensch-Maschine-Schnittstelle (110) oder eine Steuereinheit (10) zur Steuerung eines Fall- oder Gleitschirms (5), **dadurch gekennzeichnet, dass**

dieses eine Höhen-Meßeinrichtung (101) zur Ermittlung der momentanen Höhe des Fall-oder Gleitschirms (5), eine Zeit-Meßeinrichtung (103) und ein Flugbahn-Kontrollsystem (111) aufweist, das die momentane Höhe und Zeit mit einer aus einer Sinkrate (v) über die Zeit gebildeten Höhen-Zeit-Linie (22, 24; 31, 32; 28) vergleicht, und aus der ermittelten Differenz zu der Höhen-Zeit-Linie (22, 24; 31, 32; 28) Steuerungs-Vorgaben ermittelt, um diese an die Mensch-Maschine-Schnittstelle (110) oder die Steuereinheit (10) zu senden.

16. Zur Implementierung in ein Computerprogramm-System vorgesehenes Verfahren zur Ermittlung von Bahnführungs-Vorgaben zur Steuerung von zumindest einem Fall-oder Gleitschirm (5), **dadurch gekennzeichnet, dass**
   die momentane Höhe und Zeit mit einer aus einer Sinkrate (v) über die Zeit gebildeten Höhen-Zeit-Linie (22, 24; 31, 32; 28) verglichen wird, aus der ermittelten Differenz zu dieser Steuerungs-Vorgaben ermittelt werden und die Steuerungs-Vorgaben an die Mensch-Maschine-Schnittstelle (110) oder die Steuereinheit (10) gesendet werden.

**Claims**

1. A flight path planning device for determining path guidance parameters for at least one parachute or paraglider (5), **characterized in that** the flight path planning device (1) determines an altitude/time corridor (20, 30) as a flight region to be kept to by the parachute or paraglider (5), the limits of which are calculated from altitude/time lines (22, 24; 31, 32) on the basis of a reference point determined by means of an altitude and a time-coordinate, the course of the altitude/time lines being calculated in each case from the integral of a defined sink rate (v) over time, different sink rates being associated with the altitude/time lines.

2. A flight path planning device according to claim 1, **characterized in that** the flight path planning device determines at least two altitude/time corridors (20, 30) for a respective at least one parachute or paraglider (5), the limits thereof being spaced apart from one another at a predetermined altitude and time-dependent distance.

3. A flight path planning device according to claim 1 or 2, **characterized in that** the reference point is a drop point or a touch-down point.

4. A flight path planning device according to claim 1, 2 or 3, **characterized in that** the altitude/time corridor is calculated from an altitude/time line on the basis of a maximum sink rate and from an altitude/time line on the basis of a minimum sink rate of the parachute or paraglider (5).

5. A flight path planning device according to claim 1, 2 or 3, **characterized in that** the altitude/time corridor is calculated from a nominal altitude/time line on the basis of a nominal sink rate and the limits of the altitude/time corridor are calculated by means of differences from the nominal altitude/time line.

6. A flight path planning device according to any one of claims 1 to 5, **characterized in that**, in addition, the respective sink rate on which the method is based is derived by using the lift coefficient, the effectiveness of the control surfaces in dependence on the regulating distance of the control lines, and the surface area of the parachute or paraglider (5).

7. A method provided for implementation in a computer program system for determining path guidance parameters for controlling at least one parachute or paraglider (5), **characterized in that** an altitude/time corridor (20, 30) is determined as a flight region to be kept to by the parachute or paraglider (5), the limits thereof being calculated from altitude/time lines (22, 24; 31, 32), the course of which is calculated in each case from the integral of a defined sink rate (v) over time, different sink rates being associated with the limits.

8. A flight path planning device for determining path guidance parameters for at least one parachute or paraglider (5), **characterized in that** the flight path planning device (1) determines an altitude/time line (28) as standard on the basis of a reference point determined by an altitude and a time-coordinate as a desired line to be kept to by the parachute or paraglider (5) at a defined distance, the course of which line is calculated from the integral of a defined sink rate (v) over time.

9. A flight path planning device according to claim 8, **characterized in that** the flight path planning device determines at least two altitude/time lines (28) for a respective at least one parachute or paraglider (5), which are spaced from one another at a predetermined altitude and time-dependent distance.

10. A flight path planning device according to claim 8 or claim 9, **characterized in that** the reference point is a drop point or a touch-down point.

11. A flight path planning device according to any one of claims 8 to 10, **characterized in that** in addition the respective sink rate on which the method is based in each case is derived by using the lift coefficient, the effectiveness of the control surfaces in dependence on the regulating distance of the control lines, and the surface area of the parachute or paraglider (5).

12. A method provided for implementation in a computer program system for determining path guidance parameters for controlling at least one parachute or paraglider (5), **characterized in that** an altitude/time line (22, 24; 31, 32; 28) calculated on the basis of a reference point determined by means of an altitude and a time-coordinate is determined as a desired line to be kept to by the parachute or paraglider (5) at a defined distance, the course of which line is calculated from the integral of a defined sink rate (v) over time.

13. A path guidance system for communicating control parameters to a man/machine interface (110) or a control unit (10) for controlling a parachute or paraglider (5), **characterized in that** the system has an altitude-measuring device (101) for determining the momentary altitude of the parachute or paraglider (5), a chronometer (103) and a flight path control system (111) which compares the momentary altitude and time with the stored limits of an altitude/time corridor (20, 30) calculated from a minimum and maximum sink rate (v) over time, and from the detected difference of the momentary actual position with respect to the limits of the corridor determines control parameters, in order to transmit these to the man/machine interface (110) or the control unit (10).

14. A method provided for implementation in a computer program system for determining control parameters for controlling at least one parachute or paraglider (5), **characterized in that** the momentary altitude and time are compared with the stored limits of an altitude/time corridor (20, 30) calculated from a minimum and maximum sink rate (v) over time, control parameters are determined from the detected difference from the limits, and these are transmitted to the man/machine interface (110) or the control unit (10).

15. A path guidance system for communicating control parameters to a man/machine interface (110) or a control unit (10) for controlling a parachute or paraglider (5), **characterized in that** the system has an altitude measuring device (101) for determining the momentary altitude of the parachute or paraglider (5), a chronometer (103) and a flight path control system (111) which compares the momentary altitude and time with an altitude/time line (22, 24; 31, 32; 28) calculated from a sink rate (v) over time, and, from the detected difference from the altitude/time line (22, 24; 31, 32; 28), determines control parameters in order to transmit these control parameters to the man/machine interface (110) or the control unit (10).

16. A method provided for implementation in a computer program system for determining path guidance parameters for controlling at least one parachute or paraglider (5), **characterized in that** the momentary altitude and time are compared with an altitude/time line (22, 24; 31, 32; 28) calculated from a sink rate (v) over time, from the detected difference therefrom control parameters are determined, and the control parameters are transmitted to the man/machine interface (110) or the control unit (10).

## Revendications

1. Dispositif de planification de vol pour la détermination de consignes de guidage de trajectoire pour au moins un parachute ou un parapente (5), **caractérisé en ce que** le dispositif de planification de vol (1) détermine un corridor hauteur-temps (20, 30) comme zone de vol à respecter par le parachute ou le parapente (5), dont les limites sont formées par des lignes hauteur-temps (22, 24; 31, 32) sur la base d'un point de référence déterminé par une coordonnée de hauteur et une coordonnée de temps, en formant le tracé des lignes hauteur-temps chaque fois par l'intégrale d'une vitesse de descente prédéterminée (v) par rapport au temps et en associant différentes vitesses de descente aux lignes hauteur-temps.

2. Dispositif de planification de vol selon la revendication 1, **caractérisé en ce que** pour au moins un parachute ou un parapente (5) respectivement, le dispositif de planification de vol détermine au moins deux corridors hauteur-temps (20, 30) dont les limites sont éloignées l'une de l'autre d'une distance prédéterminée qui dépend de la hauteur et du temps.

3. Dispositif de planification de vol selon la revendication 1 ou 2, **caractérisé en ce que** le point de référence est un point de largage ou un point d'atterrissage.

4. Dispositif de planification de vol selon la revendication 1, 2 ou 3, **caractérisé en ce que** le corridor hauteur-temps est formé par une ligne hauteur-temps sur la base d'une vitesse de descente maximale et par une ligne hauteur-temps sur la base d'une vitesse de descente minimale du parachute ou du parapente (5).

5. Dispositif de planification de vol selon la revendication 1, 2 ou 3, **caractérisé en ce que** le corridor hauteur-temps est formé par une ligne nominale hauteur-temps sur la base d'une vitesse de descente nominale, et les limites du corridor hauteur-temps sont formées par les différences par rapport à la ligne nominale hauteur-temps.

**6.** Dispositif de planification de vol selon l'une des revendications 1 à 5,
**caractérisé en outre en ce que**
la vitesse de descente formant la base du procédé est déterminée à l'aide du coefficient de portance, de l'efficacité des surfaces de commande en fonction de la course de réglage des cordes de commande et de la surface du parachute ou du parapente (5).

**7.** Procédé prévu pour être mis en oeuvre dans un système de programme informatique pour la détermination de consignes de guidage de trajectoire en vue de la commande d'au moins un parachute ou un parapente (5),
**caractérisé en ce qu'**
on détermine comme zone de vol à respecter par le parachute ou le parapente (5), un corridor hauteur-temps (20, 30) dont les limites sont formées par des lignes hauteur-temps (22, 24; 31, 32), dont le tracé est chaque fois formé par l'intégrale d'une vitesse de descente prédéterminée (v) par rapport au temps, et différentes vitesses de descente sont associées aux limites.

**8.** Dispositif de planification de vol pour la détermination de consignes de guidage de trajectoire pour au moins un parachute ou un parapente (5),
**caractérisé en ce que**
comme consigne le dispositif de planification de vol (1) détermine une ligne hauteur-temps (28) sur la base d'un point de référence déterminé par une coordonnée de hauteur et une coordonnée de temps, comme une ligne de consigne à respecter à une distance prédéterminée par le parachute ou le parapente (5), dont le tracé est formé par l'intégrale d'une vitesse de descente prédéterminée (v) par rapport au temps.

**9.** Dispositif de planification de vol selon la revendication 8,
**caractérisé en ce que**
pour au moins un parachute ou un parapente (5) respectivement, le dispositif de planification de vol détermine au moins deux lignes hauteur-temps (28) éloignées l'une de l'autre d'une distance prédéterminée qui dépend de la hauteur et du temps.

**10.** Dispositif de planification de vol selon la revendication 8 ou 9,
**caractérisé en ce que**
le point de référence est un point de largage ou un point d'atterrissage.

**11.** Dispositif de planification de vol selon l'une des revendications 8 à 10,
**caractérisé en outre en ce que**

la vitesse de descente formant la base du procédé est déterminée à l'aide du coefficient de portance, de l'efficacité des surfaces de commande en fonction de la course de réglage des cordes de commande et de la surface du parachute ou du parapente (5).

**12.** Procédé prévu pour un système de programme informatique pour la détermination de consignes de guidage de trajectoire en vue de la commande d'au moins un parachute ou un parapente (5),
**caractérisé en ce qu'**
on détermine une ligne hauteur-temps (22, 24; 31, 32; 28) formée sur la base d'un point de référence déterminé par une coordonnée de hauteur et une coordonnée de temps comme ligne de consigne à respecter à une distance prédéterminée du parachute ou du parapente (5), et dont le tracé est formé par l'intégrale d'une vitesse de descente prédéterminée (v) par rapport au temps.

**13.** Système de guidage de trajectoire pour la détermination de consignes de commande à une interface homme-machine (110) ou à une unité de commande (10) pour la commande d'un parachute ou d'un parapente (5),
**caractérisé en ce qu'**
il comprend un dispositif de mesure de hauteur (101) pour déterminer la hauteur instantanée du parachute ou du parapente (5), un dispositif de mesure du temps (103) et un système de contrôle de trajectoire (111), qui compare la hauteur instantanée et le temps instantané avec les limites mémorisées d'un corridor hauteur-temps (20, 30) formé par une vitesse de descente minimale ou maximale (v) par rapport au temps, et qui détermine des consignes de commande à partir de la différence déterminée de la position réelle instantanée par rapport aux limites du corridor, afin de les envoyer à l'interface homme-machine (110) ou à l'unité de commande (10).

**14.** Procédé prévu pour un système de programme informatique, pour la détermination de consignes de commande en vue de la commande d'au moins un parachute ou un parapente (5),
**caractérisé en ce qu'**
on compare la hauteur instantanée et le temps instantané avec les limites mémorisées d'un corridor hauteur-temps (20, 30) formé à partir d'une vitesse de descente minimale ou maximale (v) par rapport au temps, on détermine des consignes de commande à partir de la différence déterminée par rapport aux limites et on les envoie à l'interface homme-machine (110) ou à l'unité de commande (10).

**15.** Système de guidage de trajectoire pour la détermination de consignes de commande à une interface homme-machine (110) ou à une unité de commande (10) pour la commande d'un parachute ou d'un parapente (5),

**caractérisé en ce qu'**

il comprend un dispositif de mesure de hauteur (101) pour déterminer la hauteur instantanée du parachute ou du parapente (5), un dispositif de mesure du temps (103) et un système de contrôle de trajectoire (111), qui compare la hauteur instantanée et le temps instantané avec une ligne hauteur-temps (22, 24; 31, 32; 28) formée à partir d'une vitesse de descente (v) en fonction du temps, et qui détermine des consignes de commande à partir de la différence déterminée par rapport à la ligne hauteur-temps (22, 24; 31, 32; 28), afin de les envoyer à l'interface homme-machine (110) ou à l'unité de commande (10).

16. Procédé prévu pour un système de programme informatique, pour la détermination de consignes de guidage de trajectoire en vue de la commande d'au moins un parachute ou un parapente (5),

**caractérisé en ce qu'**

on compare la hauteur instantanée et le temps instantané avec une ligne hauteur-temps (22, 24; 31, 32; 28) formée à partir d'une vitesse de descente (v) en fonction du temps, on détermine des consignes de commande à partir de la différence déterminée par rapport à celle-ci et on les envoie à l'interface homme-machine (110) ou à l'unité de commande (10).

FIG.1

FIG. 2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4336056 A1
- US 5522567 A